# EUROPEAN PATENT SPECIFICATION

(11) **EP 3 077 242 B1**
(45) Date of publication and mention of the grant of the patent: **18.12.2019**
(21) Application number: 14824165.6
(22) Date of filing: 07.11.2014
(51) Int. Cl.: B60K 17/28

(54) **CLOSING MECHANISM FOR A POWER TAKE-OFF SHAFT**
SCHLIESSMECHANISMUS FÜR EINE ZAPFWELLE
MÉCANISME DE FERMETURE POUR UN ARBRE DE PRISE DE FORCE

(30) Priority: 04.12.2013 TR 201314167
(43) Date of publication of application: 12.10.2016
(73) Proprietor: Turk Traktor Ve Ziraat Makineleri Anonim Sirketi, 06560 Ankara (TR)
(72) Inventor: COMERT, Samet Adem, 06560 Ankara (TR); ALBAYRAK, Sedat, 06560 Ankara (TR)
(74) Representative: Kayahan, Senem
(86) International application number: PCT/TR2014/000449
(87) International publication number: WO 2015/084278

(56) References cited:
- DE-A1- 1 810 542
- US-A- 3 969 033
- US-A- 4 008 583

## Description

### Technical Field of the Invention

The invention is related to a closing mechanism for a power take-off shaft that automatically closes by means of a flexible component that acts as a protective cover over the top of the power take-off shaft of hydraulic power units.

### Prior Art Related to the Technical Field of the Invention

It is widely known that the power take-off shafts or the cardan shafts found in hydraulic power units used in tractors or machinery such as terrain vehicles that are involved in active work lead to various accidents. The fact that a part of the end of the power take-off shaft end remains unattached and extending outside of the system after its connections are made when the power take-off shafts are in operating state can lead to various problems. The rotational movement of the power take-off shafts when in operating state poses a great danger to farmers or users. Work accidents may arise as a result of a part of the user's clothing or the user himself/herself accidentally coming into contact with these shafts. Various studies are being carried out related to protective covers for the power take-off shafts in order to eliminate this danger.

The protective covers commonly used require an application based on attaching and removing. In other words, they are in the form of protective covers which must be attached by the user when the equipment is not being used and removed once again when the equipment is to be operated. However, as this application is dependent on the user, dangers such as the cover being lost or the user forgetting to attach/remove the cover after each operation continue to be observed.

Patent application number EP0357580 A2 of the known state of art, which is different from the application mentioned above, describes a system wherein the vehicle transmits the power it receives from the main gear to the top equipment of commercial vehicles such as tractors, concrete mixers and sewage trucks by means of the shaft found on the power box. In this application, when the system is in operating state, a brake device is utilized to protect the user from dangers relating to the shaft. At the same time, in the invention described in detail below, a closing mechanism containing a flexible component is used to protect the power shaft. By means of the said flexible component, the invention provides a practical and safe solution due to the application not being dependent on the user and it operating automatically without the need for an additional mechanism.

### Objective and Brief Description of the Invention

The objective of the invention is to develop a closing mechanism that acts as a protective cover around the power take-off shaft in order to provide protection to users against potential work accidents.

When commonly used covers which require them to be attached and removed are used, it is highly probable that the user may forget to attach or remove the same. Thus, the power take-off shaft being forgotten active without any protection on top of it leads to dangerous situations and increases risks in work safety. Additionally, again due to them requiring them to be attached and removed, these covers are frequently lost and are thus not preferred by farmers.

The other objective of the invention is to provide a mechanism on the power take-off shaft that automatically closes. In this case, different from the covers that are attached and removed, there is always a closing mechanism on top of the power take-off shaft. By means of this invention, as this mechanism is automatically activated when the shaft is in operating state, potential work accidents are eliminated.

US4008583 document discloses a closing mechanism (20) for a power take-off shaft (12a) that automatical closes to seal the power take-off shaft (12a) found in hydraulic power units, comprisING a power take-off shaft containing a channel structure in the form of longitudinal stripes on the horizontal axis. This document shows a swinging cover. However, such a cover is not automatically protecting the shaft depending on the PTO shaft rotation.

### Definition of the Figures Describing the Invention

The figures provided for the closing mechanism for a power take-off shaft developed by means of this invention to be better understood and the related explanations have been provided below.
- Figure-1:: Exploded view of the closing mechanism for a power take-off shaft.
- Figure-2:: Perspective view of the closing mechanism for a power take-off shaft.
- Figure-3:: View containing the safety component of the closing mechanism for a power take-off shaft.

### Definition of the Components/ Parts/ Pieces Forming the Invention

In order to better explain the closing mechanism for a power take-off shaft developed in this invention, the parts and pieces in the figures have been numbered as specified below.
10. Closing mechanism for a power take-off shaft
1. Outer ring
2. Ball bearings
3. Flexible component
4. Torque limiter coupling
5. Power take-off shaft
6. Security component
7. Inner ring of the flexible component (3)
8. Flexible structures

### Detailed Description of the Invention

Ball bearings are connection components formed of two rings, namely the inner and the outer rings which have different diameters, and the ball bearings. Within the scope of the invention, an outer ring (1) of a ball bearing, achieved by means of the removal of the inner ring, and ball bearings (2) are used.

Figure-1 shows the exploded view of a closing mechanism developed for a power take-off shaft (10) described in this invention. The said mechanism (10) contains an outer ring (1), ball bearings (2), a flexible component (3), a torque limiter coupling (4) and a power take-off shaft (5).

The invention contains a power take-off shaft (5) containing a channel structure in the form of longitudinal stripes on the horizontal axis within the hydraulic power unit. The invention contains ball bearings (2) sufficient in number in accordance with the channel structure of this shaft (5).

The mechanism (10) of the invention utilizes a torque limiter coupling (4) that rotates in one direction. The outer ring (1) of the ball bearing of which the inner ring has been removed so as not to be used and which contains sufficient number of ball bearings (2) is connected to the body of the torque limiter coupling (4) by means of shrink fitting.

The flexible component (3), which is the most important component of this invention, contains an outer ring (not shown in the figures), an inner ring (7) and flexible structures (8) that can change shape between these two components in a reciprocating manner. The outer ring of the said flexible component (3) is fixed to a reference surface, preferably the power take-off casting cover (not shown in the figures). As shown in Figure-2, the inner ring of the flexible component (3) is connected to the ball bearing outer ring (1) via the said torque limiter coupling (4), and from there to the power take-off shaft (5) by means of the ball bearings (2).

According to the invention, when this power take-off shaft (5) is operating, the torque that is formed as a result of the rotational motion is transmitted to the torque limiter coupling (4) by means of the ball bearings (2). Accordingly, the flexible structures (8) on the flexible component (3) of which the inner ring (7) is connected to the coupling (4) carry out a linear movement on the axis of revolution and start to extend forward. The ball bearings (2) are only tightened when they extend until the end point of the channels on the power take-off shaft (5). Thus, the mentioned ball bearings (2) allow the linear movement of the flexible structures (8) up until a certain point. By this means, the extension of the flexible structures (8) along the axis comes to an end, the torque increases and the torque limiter coupling (4) runs idle and the further twisting of the shaft (5) is prevented. As a result, the surrounding of the power take-off shaft (5) is covered by this flexible component (3) which contains flexible structures (8) and acts as a protective cover. Under these circumstances, the surrounding of the power take-off shaft (5) is covered without the requirement of an additional mechanism and thus the danger for users is eliminated. In other words, by means of the closing mechanism for a power take-off shaft (10) described in this invention, the surrounding of the power take-off shaft (5) is sealed and the user is protected.

When the operation of the said shaft (5) comes to a stop, the torque limiter coupling (4) which revolves in a single direction starts to revolve in the opposite direction. As a result of this movement of the coupling (4), the flexible component (3) which contains flexible structures (8) returns to the initial position and moves in the opposite direction of the revolving movement.

Figure-3 shows the closing mechanism for a power take-off shaft (10) described in this invention when it is in closed position and with a security component (6) on top of it. The said security component (6) is a component independent of the closing mechanism (10) described in the invention. This security component (6) is used to fully seal the power take-off shaft (5) used in hydraulic power units from the external environment and a boot is used as the security component (6) within the scope of this invention.

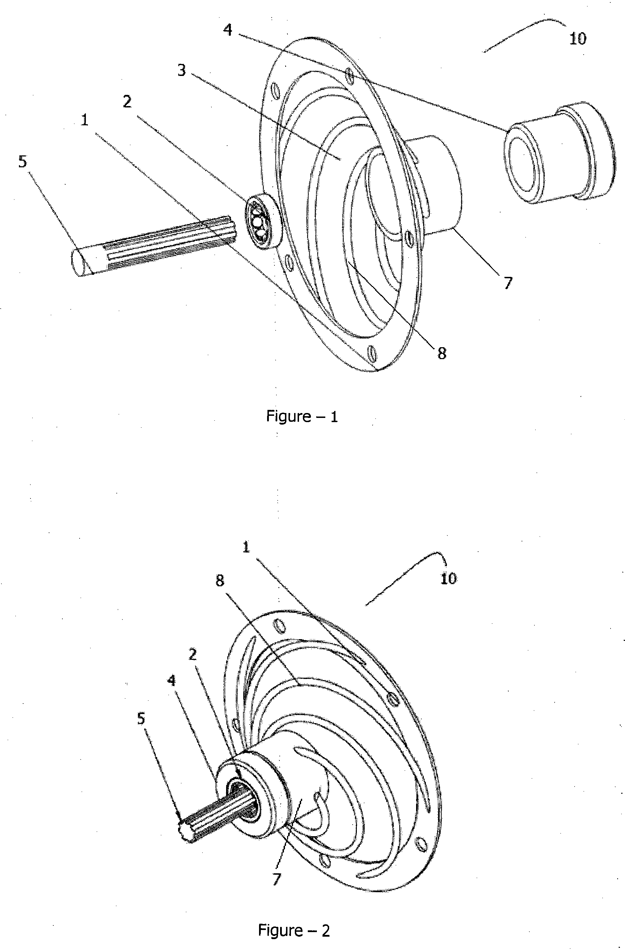

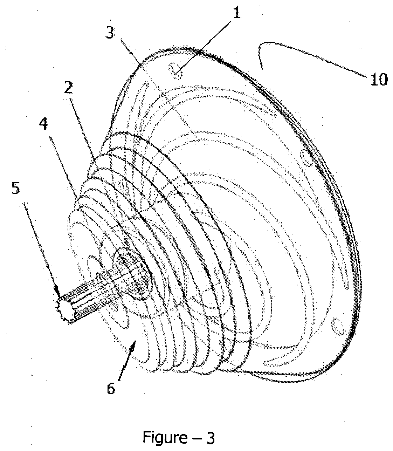

## Claims

1. Closing mechanism for a power take-off shaft (10) that automatically closes to seal
the power take-off shaft (5) found in hydraulic power units, comprising - a power take-off shaft (12a) containing a channel structure in the form of longitudinal stripes on the horizontal axis, **characterized in that** it further comprises
- a ball bearing outer ring (1) achieved by means of the removal of the inner ring and a sufficient number of ball bearings (2),
- a flexible component (3) that contains an outer ring fixed to a reference surface, preferably the power take-off casting cover, an inner ring (7) and flexible structures (8) that can change shape between these two components in a reciprocating manner,
- a torque limiter coupling (4) that revolves in a single direction,
wherein when said power take-off shaft (5) starts to operate, the torque that is formed as a result of the rotational motion is transmitted to the torque limiter coupling (4) by means of the ball bearings (2) and with this, the flexible component (3), by means of the flexible structures (8) on top of it, carries out a linear movement on the axis of revolution.

2. Closing mechanism for a power take-off shaft (10) according to Claim 1 **characterized in that** the ball bearing outer ring (1) which contains sufficient number of ball bearings (2) is connected to the body of the said coupling (4) by means of shrink fitting.

3. Closing mechanism for a power take-off shaft (10) according to Claim 1 or 2 **characterized in that** the said inner ring (7) of the flexible component (3) is connected to the ball bearing outer ring (1) via the torque limiter coupling (4).

4. Closing mechanism for a power take-off shaft (10) according to Claim 1 **characterized in that** when the ball bearings (2) extend until the end point of the channels on the power take-off shaft (5) and are tightened as a result, the said flexible structures (8) extend along the axis and automatically seal around the power take-off shaft (5).

5. Closing mechanism for a power take-off shaft (10) according to Claims 1 **characterized in that** when the operation of the said shaft (5) comes to a stop, the torque limiter coupling (4) which revolves in a single direction starts to revolve in the opposite direction and, as a result, the flexible component (3) which contains flexible structures (8) moves in the opposite direction of the revolving movement.

6. Closing mechanism for a power take-off shaft (10) according to one of the claims above **characterized in that** it contains an additional, independent security component (6) for fully sealing the said power take-off shaft (5) from the external environment.

7. Closing mechanism for a power take-off shaft (10) according to Claim 6 **characterized in that** the said security component (6) is a boot.

## Patentansprüche

1. Schließmechanismus für eine Antriebswelle (10), die sich automatisch schließt, um die Antriebswelle (5) in hydraulischen Antrieben abzudichten, umfassend eine Antriebswelle (12a), die eine Kanalstruktur in Form von Längsstreifen auf der horizontalen Achse enthält, **dadurch gekennzeichnet, dass** er ferner umfasst
- einen Kugellager-Außenring (1), der durch das Entfernen des Innenrings und eine ausreichende Anzahl von Kugellagern (2) erreicht wird,
- eine flexible Komponente (3), die einen an einer Referenzfläche befestigten Außenring, vorzugsweise die Antriebswellenabdeckung, einen Innenring (7) und flexible Strukturen (8) enthält, die die Form zwischen diesen beiden Komponenten hin und her wechseln können,
- eine Drehmoment-Limiterkupplung (4), die sich in eine einzige Richtung dreht,
wobei
wenn die Antriebswelle (5) in Betrieb genommen wird, wird das durch die Rotationsbewegung gebildete Drehmoment mittels der Kugellager (2) auf die Drehmoment-Limiterkupplung (4) übertragen und damit führt die flexible Komponente (3) mittels der darauf befindlichen flexiblen Strukturen (8) eine Linearbewegung auf der Drehachse aus.

2. Schließmechanismus für eine Antriebswelle (10) nach Anspruch 1, **dadurch gekennzeichnet, dass** der Kugellager-Außenring (1), der eine ausreichende Anzahl von Kugellagern (2) enthält, mit dem Körper der Kupplung (4) mittels Schrumpfsitz verbunden ist.

3. Schließmechanismus für eine Antriebswelle (10) nach Anspruch 1 oder 2, **dadurch gekennzeichnet, dass** der Innenring (7) der flexiblen Komponente (3) über die Drehmoment-Limiterkupplung (4) mit dem Kugellager-Außenring (1) verbunden ist.

4. Schließmechanismus für eine Antriebswelle (10) nach Anspruch 1, **dadurch gekennzeichnet, dass**, wenn sich die Kugellager (2) bis zum Endpunkt der Kanäle auf der Antriebswelle (5) erstrecken und dabei festgezogen werden, sich die flexiblen Strukturen (8) entlang der Achse erstrecken und automatisch um die Antriebswelle (5) dichten.

5. Schließmechanismus für eine Antriebswelle (10) nach Anspruch 1, **dadurch gekennzeichnet, dass** bei einem Stopp des Betriebs der Welle (5) die in einer Richtung rotierende Drehmoment-Limiterkupplung (4) in die entgegengesetzte Richtung zu drehen beginnt und damit die flexible Komponente (3), die flexible Strukturen (8) enthält, sich in die entgegengesetzte Richtung der sich drehenden Bewegung bewegt

6. Schließmechanismus für eine Antriebswelle (10) nach einem der vorstehenden Ansprüche, **dadurch gekennzeichnet, dass** er eine zusätzliche, unabhängige Sicherheitskomponente (6) zum vollständigen Abdichten der Antriebswelle (5) gegenüber der äußeren Umgebung enthält.

7. Schließmechanismus für eine Antriebswelle (10) nach Anspruch 6, **dadurch gekennzeichnet, dass** die Sicherheitskomponente (6) ein Boot ist.

## Revendications

1. Mécanisme de fermeture pour un arbre de prise de puissance (10) qui se ferme automatiquement pour rendre étanche l'arbre de prise de puissance (5) que l'on trouve dans les groupes hydrauliques de puissance, comprenant un arbre de prise de puissance (12a) contenant une structure de canal sous forme de bandes longitudinales sur l'axe horizontal, **caractérisé en ce qu'**il comprend en outre
- une bague extérieure (1) de roulement à billes obtenue par enlèvement de la bague intérieure et un nombre suffisant de roulements à billes (2),
- un composant flexible (3) qui contient une bague extérieure fixée sur une surface de référence, de préférence le couvercle de prise de puissance en fonte, une bague intérieure (7) et des structures flexibles (8) qui peuvent changer de forme entre ces deux composants d'une manière alternative,
- un accouplement limiteur de couple (4) qui tourne dans une seule direction,
dans lequel
lorsque ledit arbre de prise de puissance (5) commence à fonctionner, le couple qui est formé par le mouvement de rotation est transmis à l'accouplement limiteur de couple (4) par l'intermédiaire des roulements à billes (2) et avec celui-ci, le composant flexible (3), au moyen des structures flexibles (8) qui se trouvent au-dessus, effectue un mouvement linéaire sur l'axe de révolution.

2. Mécanisme de fermeture pour un arbre de prise de puissance (10) selon la revendication 1 **caractérisé en ce que** la bague extérieure (1) de roulement à billes qui contient un nombre suffisant de roulements à billes (2) est reliée au corps dudit accouplement (4) au moyen d'un ajustement fretté.

3. Mécanisme de fermeture pour un arbre de prise de puissance (10) selon la revendication 1 ou 2 **caractérisé en ce que** ladite bague intérieure (7) du composant flexible (3) est reliée à la bague extérieure (1) de roulement à billes par l'intermédiaire de l'accouplement limiteur de couple (4).

4. Mécanisme de fermeture pour un arbre de prise de puissance (10) selon la revendication 1 **caractérisé en ce que** lorsque les roulements à billes (2) s'étendent jusqu'au point final des canaux sur l'arbre de prise de puissance (5) et sont serrés en conséquence, lesdites structures flexibles (8) s'étendent le long de l'axe et assurent automatiquement l'étanchéité autour de l'arbre de prise de puissance (5).

5. Mécanisme de fermeture pour un arbre de prise de puissance (10) selon la revendication 1 **caractérisé en ce que** lorsque le fonctionnement dudit arbre (5) s'arrête, l'accouplement limiteur de couple (4) qui tourne dans une seule direction commence à tourner dans la direction opposée et, en conséquence, le composant flexible (3) qui contient des structures flexibles (8) se déplace dans la direction opposée au mouvement de rotation.

6. Mécanisme de fermeture pour un arbre de prise de puissance (10) selon l'une des revendications ci-dessus **caractérisé en ce qu'**il contient un composant de sécurité (6) supplémentaire, indépendant pour assurer l'étanchéité totale dudit arbre de prise de puissance (5) par rapport à l'environnement extérieur.

7. Mécanisme de fermeture pour un arbre de prise de puissance (10) selon la revendication 6 **caractérisé en ce que** ledit composant de sécurité (6) est une botte.
